# EUROPEAN PATENT APPLICATION

(11) **EP 4 239 187 A1**
(43) Date of publication of application: **06.09.2023**
(21) Application number: 22159692.7
(22) Date of filing: 02.03.2022
(51) Int. Cl.: F03D 7/02, F03D 17/00

(54) **METHOD AND DEVICE FOR IDENTIFYING A DOMINANT MODE DURING OPERATION OF A WIND TURBINE**

(71) Applicant: Siemens Gamesa Renewable Energy A/S, 7330 Brande (DK)
(72) Inventor: Alberts, Johannes Gerhardes Wardjan, 2660 Brøndby Strand (DK); Frank, Jared, Longmont CO, 80503 (US); Brill, Anthony, Longmont, 80504 (US); Pierce, Kirk, Lafayette, 80026 (US)
(74) Representative: SGRE-Association

(57) **Abstract**

It is described a device and a method of identifying a dominant mode during operation of a wind turbine (1), where at least a first sensor is arranged at a first location of the wind turbine (1), and a second sensor is arranged at a second location of the wind turbine (1), wherein the first location is different from the second location. First and second spectral densities are derived from measurements of the first and second sensors. The first and second spectral densities are combined by a mathematical operation to obtain a combined spectral density, and the dominant mode is identified from the combined spectral density.

## Description

### Field of invention

The present invention relates to a method and a device for identifying a dominant (resonant) mode during operation of a wind turbine.

Wind turbines rely on stable sensor measurements to exhibit stable behaviour, e.g., in the control of rotor speed, generator torque, blade pitch, yaw position, etc. However, the sensor measurements can often be sensitive to periodic excitations (e.g., due to gravity, tower shadow, wind shear, turbulence, rotor imbalance, etc.) and resonant vibrations (e.g., tower modes, blade edgewise modes, whirling modes, etc.). When oscillations propagate into the sensor measurements, and from there into the wind turbine's controllers, this may cause a positive feedback that destabilizes the wind turbine resulting in anything from shutdown to damage to the wind turbine components. For example, tower oscillations picked up by speed measurements could appear in pitch and/or power references that, over time, reduce the lifetime of the pitch bearings or, at some point, worsen the tower oscillations enough through feedback to yield tower failure. Therefore, it is of high importance to track (i.e., to estimate the location of) and remove such oscillations, either by actively dampening the oscillations at their origin or by passively filtering them from the measurement signals.

Predicting the frequencies of oscillations due to periodic excitations of the blades could be realized since these frequencies are often at some multiple (n) times the blade rotational frequency. While these frequencies change with the rotor speed of the wind turbine, an estimate or measurement of rotor speed can be used to track these oscillations. However, the frequencies of resonant modes are often related to many design properties of the wind turbine, for example the material and dimensional properties of various components, the knowledge of which may be difficult to obtain since some may vary between turbines and over time on a given turbine.

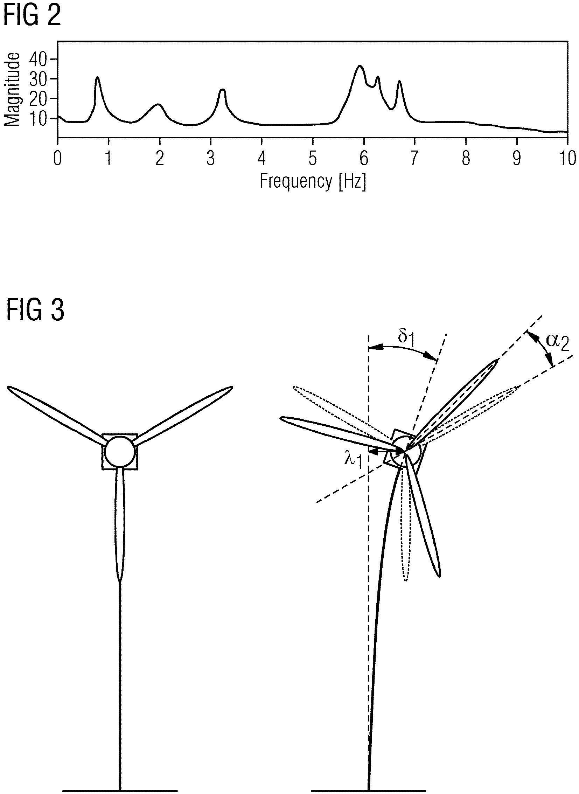

While tracking the locations of resonant modes could be realized by applying one of a variety of spectral methods (such as Discrete Fourier Transform [DFT] or Fast Fourier Transform [FFT]), as turbines become larger, distinguishing the modes responsible for specific oscillations in an affected signal becomes sophisticated. This is because the frequencies of aeroelastic modes are lower with larger turbines and the range of rotor speeds (and thus of the excitation frequencies) on a larger turbine is also lower. Therefore, methods that analyse measurements from a single affected sensor may find several modes in a spectrogram of those measurements that are in nearby or even overlapping frequency ranges (see Fig. 2). This can complicate the process of estimating the frequency of a particular mode, especially when nearby modes have comparable amplitudes or when their frequencies tend to drift over time.

Up to now, the problem of tracking particular modes in wind turbine measurements has been addressed by running offline studies (such as aeroelastic modal analyses with simulations of different turbine designs) that help to inform heuristics for distinguishing resonant modes. For example, under certain environmental or operating conditions, it may become known that one of two or more nearby/overlapping modes has a slightly higher or lower frequency or amplitude on a particular turbine design. These heuristics do not provide perfect results, but coupled with a multi-modal tracking approach (i.e., a method that locates multiple peaks in a spectrogram), they may allow the correct modal frequency to be selected.

### Summary of the Invention

There may be a need for a method and a device for identifying a dominant mode during operation of a wind turbine, which would allow the mode tracking algorithm to be simpler and more accurate. This need may be met by the subject matters according to the independent claims. The present invention is further developed as set forth in the dependent claims.

According to a first aspect of the invention, a method of identifying a dominant mode during operation of a wind turbine is provided. The wind turbine comprises a hub having a plurality of rotor blades, the hub being mounted to a nacelle to rotate about a rotation axis to drive a generator for producing electrical energy, the nacelle being mounted to a tower, at least a first sensor arranged and a second sensor. The method comprises the following steps: measuring or determining a first acceleration, velocity or position by means of the first sensor during operation of the wind turbine; performing a Fourier-analysis of the first acceleration, velocity or position to obtain a first spectral density; measuring or determining a second acceleration, velocity or position by means of the second sensor during operation of the wind turbine; performing a Fourier-analysis of the second acceleration, velocity or position to obtain a second spectral density; combining the first and second spectral densities by a mathematical operation to obtain a combined spectral density; and identifying the dominant mode from the combined spectral density.

The present invention enables a noise reduction by "averaging" multiple (i.e., at least the first and second) signals in the frequency domain. The present invention uses sensors in specific configurations on the wind turbine so that a mathematical technique, for example a noise reduction by "averaging" the spectral densities (such as spectrograms) of the multiple sensors can be used to obtain a more suitable spectrogram for a frequency estimation of certain modes (which is also known as mode tracking, since the frequency, which is associated with a resonant mode of the wind turbine, may shift over time).

Although raw measurements from each sensor installed on the wind turbine might produce noisy, multi-modal frequency responses, where it would be difficult to obtain precise locations of particular resonant modes with each individual sensor on the wind turbine without potentially expensive filtering and multi-modal algorithmic techniques, the present invention enables computationally simple unimodal algorithms for finding the global maximum of a dataset to be used to track modes of interest in certain frequency ranges of sensor measurements from the wind turbine, because at least the first and second spectral densities are combined by a mathematical operation to obtain the combined spectral density, from which the dominant mode is eventually identified. By selecting and placing the plurality of sensors on the wind turbine in a specific configuration, the present invention produces new, quasi-unimodal responses with the mode of interest isolated from nearby resonant modes on the wind turbine, allowing the mode tracking algorithm to be simpler. Moreover, the method used to combine the spectral densities (spectrograms) of raw sensor measurements suppresses the uncorrelated noise present on each sensor channel caused by the specific conditions experienced by that sensor over that time, resulting in a cleaner, more suitable spectrogram for frequency estimation. The more sensors that are available on the wind turbine to be combined in this way, the more prominent will be the mode of interest and the lower the noise floor of the combined spectrogram.

Eventually, the invention advantageously offers a faster (in time), more efficient (in computational resources), and more accurate frequency detection and removal from control signals by wind turbine controllers. When resonant modes cannot be actively damped by the wind turbine controller (perhaps for fear of exciting another nearby resonant mode), they can be filtered out, e.g., from the rotor speed measurement on the wind turbine, to prevent them from propagating into the control references used by the wind turbine.

In an embodiment, the first spectral density is a first amplitude spectrum, and the second spectral density is a second amplitude spectrum.

In an embodiment, the mathematical operation is either an addition, a subtraction, a division or a multiplication, or a combination thereof.

In an embodiment, a series of individual and different mathematical operations is performed to obtain a plurality of combined spectral densities, from which the dominant mode is identified.

In an embodiment, the first and second spectral densities are normalized before combining them. Preferably, the combined spectral density is then re-normalized, and the dominant mode is identified from the re-normalized, combined spectral density.

In an embodiment, the first and second spectral densities are filtered before combining them.

In an embodiment, the first sensor and the second sensor are arranged at different locations of the wind turbine; the first sensor and the second sensor measure the same physical parameter in different directions; the first sensor and the second sensor sense different physical parameters, in particular parameters selected from a group consisting of a blade pitch acceleration, velocity, or position; a nacelle yaw acceleration, velocity, or position; a main shaft acceleration, velocity, or position; a main shaft force; a blade moment; and a tower moment; the first sensor and the second sensor are of different technologies or signal qualities; and/or the first sensor and the second sensor sense parameters of different physical units, in particular physical units selected from a group consisting of mm, m/s, m/s², N/m, N/m², N, N·m. As to the different technologies, the sensors can be optical, magnetic, or ultrasonic sensors, for example. These differences in location and/or type and/or technology can ensure the highest quality combination of their signals (spectrograms) .

In an embodiment, one of the first and second sensors is either arranged in the nacelle and configured to measure a rotational speed of a main shaft which is connected to the hub; in the hub and configured to measure a rotational speed of the hub; in the nacelle and configured to measure a lateral acceleration of the nacelle; in the tower and configured to measure a lateral acceleration of the tower; in at least one of the blades and configured to measure a lateral acceleration of the blade; and the second sensor is arranged in one of the remaining other locations. Preferably, the first sensor is arranged in the nacelle and configured to measure the rotational speed of the main shaft, the second sensor is arranged in the hub and configured to measure the rotational speed of the hub, and a third sensor is arranged in the nacelle and configured to measure the lateral acceleration of the nacelle.

In an embodiment, the dominant mode is identified from the combined spectral density as that mode with the highest amplitude.

In an embodiment, the method further comprises steps of measuring or determining at least one further acceleration, velocity or position by means of at least one further sensor during operation of the wind turbine; performing a Fourier-analysis of the at least one further acceleration, velocity or position to obtain at least one further spectral density; pairwise combining the first spectral density, the second spectral density and the at least one further spectral density by mathematical operations to obtain combined spectral densities; and identifying the dominant mode from the combined spectral densities. In an embodiment, the first spectral density, the second spectral density and the at least one further spectral density are combined together by mathematical operations to obtain the combined spectral densities.

In an embodiment, the method further comprises steps of measuring or determining at least one further acceleration, velocity or position by means of at least one further sensor during operation of the wind turbine; performing a Fourier-analysis of the at least one further acceleration, velocity or position to obtain at least one further spectral density; wherein the first spectral density, the second spectral density and the at least one further spectral density are combined together by mathematical operations to obtain the combined spectral density.

In an embodiment, the first sensor, the second sensor and the at least one further sensor are arranged at different locations of the wind turbine; the first sensor, the second sensor and the at least one further sensor measure the same physical parameter in different directions; the first sensor, the second sensor and the at least one further sensor sense different physical parameters, in particular parameters selected from a group consisting of a blade pitch acceleration, velocity, or position; a nacelle yaw acceleration, velocity, or position; a main shaft acceleration, velocity, or position; a main shaft force; a blade moment; and a tower moment; the first sensor, the second sensor and the at least one further sensor are of different technologies or signal qualities; and/or the first sensor, the second sensor and the at least one further sensor sense parameters of different physical units, in particular physical units selected from a group consisting of mm, m/s, m/s², N/m, N/m², N, N·m.

According to a second aspect of the invention, a device for identifying a dominant mode during operation of a wind turbine is provided. The wind turbine comprises a hub having a plurality of rotor blades, the hub being mounted to a nacelle to rotate about a rotation axis to drive a generator for producing electrical energy, the nacelle being mounted to a tower, at least a first sensor and a second sensor. The device comprises a first measuring or determining unit configured to measure or determine a first acceleration, velocity or position by means of the first sensor during operation of the wind turbine; a first performing unit configured to perform a Fourier-analysis of the first acceleration, velocity or position to obtain a first spectral density; a second measuring or determining unit configured to measure or determine a second acceleration, velocity or position by means of the second sensor during operation of the wind turbine; a second performing unit configured to perform a Fourier-analysis of the second acceleration, velocity or position to obtain a second spectral density; a combining unit configured to combine the first and second spectral densities by a mathematical operation to obtain a combined spectral density; and an identifying unit configured to identify the dominant mode from the combined spectral density.

The device of the second aspect can be further developed like the method of the first aspect.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and the different elements thereof;
- Fig. 2: shows an example of a spectrogram corresponding to measurements from a wind turbine sensor over a certain time range;
- Fig. 3: shows an example of a wind turbine experiencing both tower and blade vibrations at nearby frequencies; and
- Fig. 4: shows examples of spectrograms of different sensor measurements being combined to provide a combined spectrogram in which one mode is dominant in the frequency range of interest.

### Detailed Description

The illustrations in the drawings are schematics. It is noted that in different figures, similar or identical elements are provided with the same reference signs.

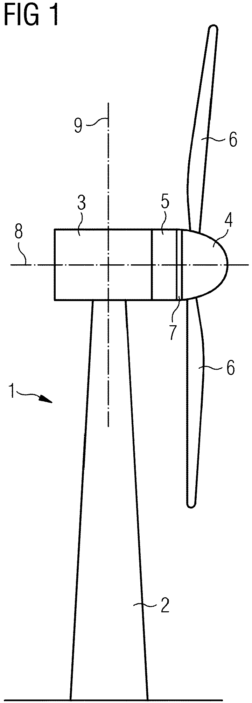

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as a yaw axis 9.

The wind turbine 1 also comprises a hub 4 with three rotor blades 6 (of which two rotor blades 6 are depicted in Fig. 1). Each blade 6 is configured to be pitched by a pitch angle about a pitch axis of the blade 6. The hub 4 is mounted rotatable about a rotation axis 8 (hub axis) with regard to the nacelle 3 by means of a main shaft which is supported by a main bearing 7.

The wind turbine 1 furthermore comprises a generator 5. The generator 5 in turn comprises a rotor connecting the generator 5 with the hub 4. If the hub 4 is connected directly to the generator 5, the wind turbine 1 is referred to as a gearless, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

**Fig. 2** shows an example of a spectrogram corresponding to the measurements from a wind turbine sensor over a certain time range. The spectrogram displays several peaks corresponding to excited modes, three of which (between 0 and 4 Hz) do not overlap and three of which (between 5 and 7 Hz) do overlap. The present invention copes with such spectrograms, especially when nearby modes have comparable amplitudes or when their frequencies tend to drift over time.

In more detail, the wind turbine 1 comprises a first sensor arranged at a first location of the wind turbine 1, a second sensor arranged at a second location of the wind turbine 1, and a third sensor arranged at a third location of the wind turbine 1, wherein the first, second and third locations are different from each other.

The method of the present invention tracks the frequency of a dominant (resonant) mode of the wind turbine 1. The sensors are installed at, on or in the wind turbine 1 such that the mode(s) of interest are present in the measurements from a set of the sensors. If a set of the three or even more sensors is arranged, different sets of nearby modes could be present in subsets of the sensor set. The method assumes that usually conditions exist under which the mode(s) of interest are actually present (otherwise, there will be no mode to track).

In an exemplary embodiment, the wind turbine 1 is instrumented with the three sensors as follows:
1. A first sensor in the nacelle 3 measuring a rotational speed of the main shaft which is connected to the hub 4 (e.g., a proximity sensor or encoder);
2. A second sensor in the hub 4 measuring a rotational speed of the hub 4 (e.g., a gyroscope); and
3. A third sensor in the nacelle 3 measuring a lateral (side-side) acceleration of the nacelle 3 (e.g., an accelerometer).

The method of the present invention comprises a step of measuring a first rotational speed by the first sensor during operation of the wind turbine 1; a step of performing a Fourier-analysis of the first rotational speed to obtain a first spectral density; a step of measuring a second rotational speed by the second sensor during operation of the wind turbine 1; a step of performing a Fourier-analysis of the second rotational speed to obtain a second spectral density; a step of measuring an acceleration by the third sensor during operation of the wind turbine 1; and a step of performing a Fourier-analysis of the acceleration to obtain a third spectral density.

Each spectral density may have a shape like that of Fig. 2, where the first spectral density can be a first amplitude spectrum, the second spectral density can be a second amplitude spectrum, and the third spectral density can be a third amplitude spectrum.

**Fig. 3** shows an example of the wind turbine experiencing both tower and blade vibrations at nearby frequencies. While the tower vibrations cause a tilting of the nacelle by an amount *δ*₁ and a lateral deflection of the nacelle by an amount *λ*₁, the vibration of the blades cause rotational deflections by an amount *α*. In more detail, when the wind turbine is excited by the wind, the tower can vibrate in such a way that the nacelle is tilted (a.k.a., "rolled") in a rotor plane with an amplitude *δ*₁ as well as deflected to the side (within the same plane) with an amplitude *λ*₁. Because both perturbations are due to the same tower vibration, they occur at the same frequency *f*₁.

Meanwhile, the blades of the wind turbine vibrate in such a way that they deflect within the rotor plane with an amplitude *α*₂ and frequency *f*₂. Each of the first to third sensors observes different vibrations experienced by the wind turbine 1 as follows:
1. The first (main shaft speed) sensor measures oscillations due to both nacelle tilt (with frequency *f*₁ and amplitude *δ*₁) and blade vibration (with frequency *f*₂ and amplitude *α*₂);
2. The second (hub speed) sensor only measures oscillations due to blade vibration (with frequency *f*₂ and amplitude *α*₂);
3. The third (lateral acceleration) sensor only measures oscillations in lateral deflection (with frequency *f*₁ and amplitude *λ*₁).

The method of the present invention further comprises a step of pairwise combining two of the first to third densities by a mathematical operation to obtain a combined spectral density; and a step of identifying the dominant mode from the combined spectral density. The dominant mode can be identified from the combined spectral density as that mode with the highest amplitude. Preferably, the first to third spectral densities can be filtered before combining them. Preferably, the first to third spectral densities can be normalized before combining them. The combined spectral density can then be re-normalized.

The present invention installs the multiple sensors on the wind turbine 1 in such a way that the spectrograms of their measurements can be combined with simple mathematical operations to give an aggregate spectrogram in which the mode of interest is the dominant one (i.e., the one with significantly higher amplitude) within the frequency range of interest. In this way, the method allows the mode of interest to be detected by simply determining the frequency that corresponds to the maximum amplitude of the aggregate spectrogram in the frequency range of interest. The mathematical operation can either be an addition, a subtraction, a division or a multiplication, or a combination thereof. For example, if the signals being combined are the same units (e.g., speed [rpm], acceleration [m/s²], moment [kNm], etc.), the squared magnitudes of their Fourier transforms (i.e., their spectrograms) can be added or subtracted as well. These operations would not be meaningful for signals with different units, e.g., the subtraction of the spectrogram of acceleration measurements from that of speed measurements, since that would violate rules of dimensional consistency.

It is determined that on this turbine design, the natural frequencies *f*1 and *f*2 are close enough in both frequency and amplitude that it is difficult to distinguish which mode in the spectrogram of the first (main shaft speed) sensor belongs to which resonant mode (i.e., the tower mode vs. the blade mode).

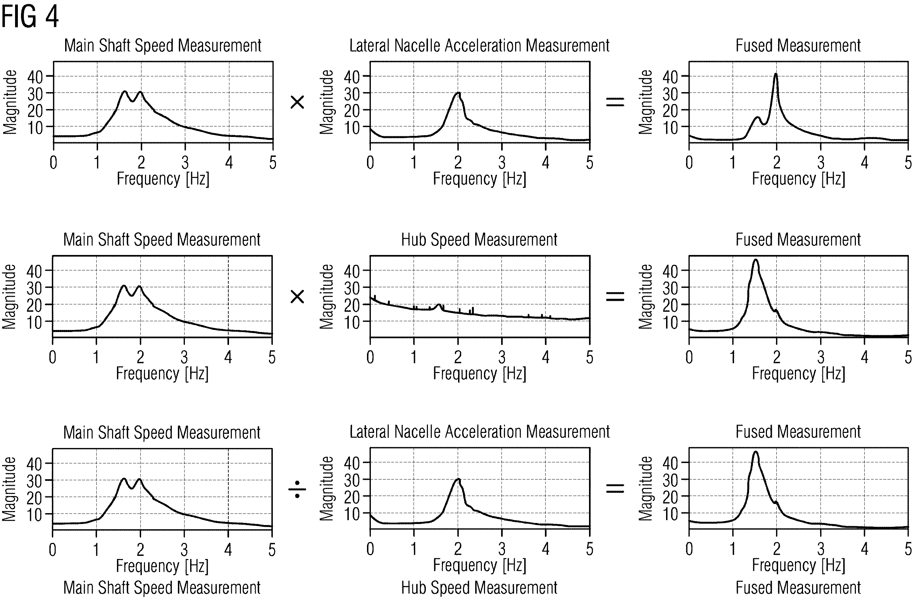

**Fig. 4** shows examples of spectrograms of different sensor measurements being combined to give an aggregate spectrogram in which one mode is dominant in the frequency range of interest. In Fig. 4, a series of individual and different mathematical operations (a), (b) and (c) is performed to obtain a plurality of (three) combined spectral densities, from which the dominant mode is identified. In Fig. 4, by having the first to third sensors installed on the wind turbine 1 that are more sensitive to only the tower more or blade mode, the spectrograms of the sensor measurements can be combined in different ways to yield aggregate spectrograms in which one mode becomes the dominant one in the frequency range of the two modes. Most importantly, because it is known that the hub speed sensor and lateral acceleration sensor are more sensitive to the blade mode and tower mode, respectively, it is then known which mode is the dominant one in the combined spectrogram.

In Fig. 4, the first spectral density, i.e., the spectrogram (i.e., the squared magnitudes of the Fourier transform in the frequency range of interest) of the first sensor, which provides the main shaft speed measurements, contains both tower and blade modes, and:
(a) is multiplied with the third spectral density of the lateral acceleration measurements provided by means of the third sensor, which contains only the tower mode, and renormalized to give a spectrogram in which the tower mode is dominant;
(b) is multiplied with the second spectral density of the hub speed measurements provided by the second sensor, which contains only the blade mode, and renormalized to give a spectrogram in which the blade mode is dominant;
(c) is divided by that of the third spectral density of lateral acceleration measurements provided by means of the third sensor, which contains only the tower mode, and renormalized to give a spectrogram in which the blade mode is dominant.

Although not shown in Fig. 4, a (not shown) operation (d) is possible, where the hub speed measurement provided by the second sensor is deducted from the main shaft speed measurement so that only the two tower modes remain. This is possible since the main shaft speed sensor measurement contains the two tower modes in its spectral density, whereas the hub speed measurements lack those two tower modes.

Therefore, it is known that multiplication (and renormalization) of spectrograms serves to magnify the coincident peaks in the two spectrograms, whereas division (and renormalization) serves to reduce coincident peaks, in turn magnifying those peaks which are not prominent in both spectrograms.

After the spectrograms of the sensor measurements are combined such that the mode of interest is made to be the dominant mode in the resulting spectrogram, that spectrogram is then used to locate the mode of interest by finding the frequency corresponding to the maximum amplitude in the frequency range of interest. The spectrograms are combined although some spectrograms could already be available with the various modes isolated from each other (for instance in Fig. 4), the third spectral density, i.e., the spectrogram of the lateral acceleration measurements already contains the isolated tower mode, and the second spectral density of the hub speed measurements already contains the isolated blade mode). If a sensor's spectrogram has the mode of interest prominent and clearly distinguishable, it might of course be used directly in tracking the frequency of that mode. However, it is usually the case that real sensor measurements have spectrograms that are noisy and/or have modes that are not very prominent. For example, the middle diagram (b) in Fig. 4 shows that the second spectral density, i.e., the spectrogram of the hub speed measurements contains noise and a mode with very low prominence. These shortcomings in the spectrogram of the sensor measurements (which may be a result of the selection and placement of the sensor, of disturbances or noise on the measurement signal, etc.) may make it difficult for the mode tracking algorithm to distinguish the mode from the rest of the frequency response of the sensor. Furthermore, the sensor measurements on larger turbines are more likely to be sensitive to several more nearby resonant modes, e.g., blade whirling modes; therefore, access to a sensor whose measurements are only sensitive to the mode of interest in a certain frequency range may be increasingly rare with larger size turbines.

To derive the greatest benefit, the selected sensors could generically sense different quantities, such as: positions, speeds or accelerations; forces or moments; voltages or currents, etc. The oscillations can be derived from the measured positions, speeds or accelerations. The sensors can be mounted in different locations on the wind turbine 1, such as: the blade 6, the hub 4, the nacelle 3, the tower 2, etc. However, if a measurement from a sensor in a rotating frame (i.e., mounted to the rotating blade 6 and measuring, e.g., the strain or moment of the blade 6) is compared with a measurement from a sensor in a fixed frame (i.e., mounted on a nonrotating component such as the nacelle 3 or the tower 2), the spectrogram of the measurements in the rotating frame will be shifted by the rotational frequency (i.e., the frequency corresponding to the rotational speed of the hub 4). Therefore, spectrograms obtained from measurements in the rotating frame will need to be compensated by being shifted in the reverse direction before they can be combined with spectrograms obtained from fixed-frame measurements.

In a modification of the embodiment of Fig. 4, only two sensors, i.e., a first sensor and a second sensor, could be arranged. For example, one of the first and second acceleration sensors is either arranged in the nacelle 3 and configured to measure a rotational speed of the main shaft which is connected to the hub 4; in the hub 4 and configured to measure a rotational speed of the hub 4; in the nacelle 3 and configured to measure a lateral acceleration of the nacelle 3; in the tower 2 and configured to measure a lateral acceleration of the tower 2; or in at least one of the blades 6 and configured to measure a lateral acceleration of the blade 6. The second acceleration sensor is arranged in one of the remaining other locations.

In another modification of the embodiment of Fig. 4, the first to third spectral densities could be combined together by mathematical operations to obtain the combined spectral density. In addition, also further spectral densities of further sensors, which are arranged at different locations, could be combined together by mathematical operations to obtain the combined spectral density.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method of identifying a dominant mode during operation of a wind turbine (1), the wind turbine (1) comprising a hub (4) having a plurality of rotor blades (6), the hub (4) being mounted to a nacelle (3) to rotate about a rotation axis (8) to drive a generator (5) for producing electrical energy, the nacelle (3) being mounted to a tower (2), and at least a first sensor and a second sensor, the method comprises the following steps:
measuring or determining a first acceleration, velocity or position by means of the first sensor during operation of the wind turbine (1);
performing a Fourier-analysis of the first acceleration, velocity, or position to obtain a first spectral density;
measuring or determining a second acceleration, velocity or position by means of the second sensor during operation of the wind turbine (1);
performing a Fourier-analysis of the second acceleration, velocity or position to obtain a second spectral density;
combining the first and second spectral densities by a mathematical operation to obtain a combined spectral density; and
identifying the dominant mode from the combined spectral density.

2. The method according to the preceding claim, wherein
first spectral density is a first amplitude spectrum, and the second spectral density is a second amplitude spectrum.

3. The method according to any one of the preceding claims, wherein
the mathematical operation is either an addition, a subtraction, a division or a multiplication, or a combination thereof.

4. The method according to the preceding claim, wherein
a series of individual and different mathematical operations is performed to obtain a plurality of combined spectral densities, from which the dominant mode is identified.

5. The method according to any one of the preceding claims, wherein
the first and second spectral densities are normalized before combining them.

6. The method according to the preceding claim, wherein
the combined spectral density is re-normalized, and the dominant mode is identified from the re-normalized, combined spectral density.

7. The method according to any one of the preceding claims, wherein
the first and second spectral densities are filtered before combining them.

8. The method according to any one of the preceding claims, wherein
the first sensor and the second sensor are arranged at different locations of the wind turbine (1);
the first sensor and the second sensor measure the same physical parameter in different directions;
the first sensor and the second sensor sense different physical parameters, in particular parameters selected from a group consisting of:
a blade pitch acceleration, velocity, or position;
a nacelle yaw acceleration, velocity, or position;
a main shaft acceleration, velocity, or position;
a main shaft force;
a blade moment; and
a tower moment;
the first sensor and the second sensor are of different technologies or signal qualities; and/or
the first sensor and the second sensor sense parameters of different physical units, in particular physical units selected from a group consisting of mm, m/s, m/s², N/m, N/m², N, N·m.

9. The method according to any one of the preceding claims, wherein
one of the first and second sensors is either arranged in the nacelle (3) and configured to measure a rotational speed of a main shaft which is connected to the hub (4); in the hub (4) and configured to measure a rotational speed of the hub (4); in the nacelle (3) and configured to measure a lateral acceleration of the nacelle (3); in the tower (2) and configured to measure a lateral acceleration of the tower (2); in at least one of the blades (6) and configured to measure a lateral acceleration of the blade (6); and
the second sensor is arranged in one of the remaining other locations.

10. The method according to the preceding claim, wherein
the first sensor is arranged in the nacelle (3) and configured to measure the rotational speed of the main shaft, the second sensor is arranged in the hub (4) and configured to measure the rotational speed of the hub (4), and a third sensor is arranged in the nacelle (3) and configured to measure the lateral acceleration of the nacelle (3).

11. The method according to any one of the preceding claims, wherein
the dominant mode is identified from the combined spectral density as that mode with the highest amplitude.

12. The method according to any one of the preceding claims, further comprising:
measuring or determining at least one further acceleration, velocity, or position by means of at least one further sensor during operation of the wind turbine (1);
performing a Fourier-analysis of the at least one further acceleration, velocity, or position to obtain at least one further spectral density;
pairwise combining the first spectral density, the second spectral density and the at least one further spectral density by mathematical operations to obtain combined spectral densities; and
identifying the dominant mode from the combined spectral densities.

13. The method according to any one of the preceding claims, further comprising:
measuring or determining at least one further acceleration, velocity, or position by means of at least one further sensor during operation of the wind turbine (1); and
performing a Fourier-analysis of the at least one further acceleration, velocity, or position to obtain at least one further spectral density;
wherein the first spectral density, the second spectral density and the at least one further spectral density are combined together by mathematical operations to obtain the combined spectral density.

14. The method according to claim 12 or 13, wherein
the first sensor, the second sensor and the at least one further sensor are arranged at different locations of the wind turbine (1);
the first sensor, the second sensor and the at least one further sensor measure the same physical parameter in different directions;
the first sensor, the second sensor and the at least one further sensor sense different physical parameters, in particular parameters selected from a group consisting of:
a blade pitch acceleration, velocity, or position;
a nacelle yaw acceleration, velocity, or position;
a main shaft acceleration, velocity, or position;
a main shaft force;
a blade moment; and
a tower moment;
the first sensor, the second sensor and the at least one further sensor are of different technologies or signal qualities; and/or
the first sensor, the second sensor and the at least one further sensor sense parameters of different physical units, in particular physical units selected from a group consisting of mm, m/s, m/s², N/m, N/m², N, N·m.

15. A device for identifying a dominant mode during operation of a wind turbine (1), the wind turbine (1) comprising a hub (4) having a plurality of rotor blades (6), the hub (4) being mounted to a nacelle (3) to rotate about a rotation axis (8) to drive a generator (5) for producing electrical energy, the nacelle (3) being mounted to a tower (2), and at least a first sensor and a second sensor arranged, the device comprises:
a first measuring or determining unit configured to measure or determine a first acceleration, velocity, or position by means of the first sensor during operation of the wind turbine (1);
a first performing unit configured to perform a Fourier-analysis of the first acceleration, velocity, or position to obtain a first spectral density;
a second measuring or determining unit configured to measure or determine a second acceleration, velocity, or position by means of the second sensor during operation of the wind turbine (1);
a second performing unit configured to perform a Fourier-analysis of the second acceleration, velocity, or position to obtain a second spectral density;
a combining unit configured to combine the first and second spectral densities by a mathematical operation to obtain a combined spectral density; and
an identifying unit configured to identify the dominant mode from the combined spectral density.
